# EUROPÄISCHE PATENTSCHRIFT

(11) **EP 1 733 931 B1**
(45) Veröffentlichungstag und Bekanntmachung des Hinweises auf die Patenterteilung: **26.02.2014**
(21) Anmeldenummer: 06011914.6
(22) Anmeldetag: 09.06.2006
(51) Int. Cl.: B60R 21/213

(54) **Sicherheitsanordnung und Verkleidungsteil für den Innenraum eines Kraftfahrzeuges**
Safety arrangement and trim element for a vehicle interior
Arrangement de sécurité et élément de revêtement intérieur pour véhicule

(30) Priorität: 17.06.2005 DE 102005028505
(43) Veröffentlichungstag der Anmeldung: 20.12.2006
(73) Patentinhaber: GM Global Technology Operations LLC, Detroit, MI 48265-3000 (US)
(72) Erfinder: Felzer, Stefan, 55442 Roth (DE); Globisch, Peter, 65189 Wiesbaden (DE); Schober, Uwe, 65468 Trebur (DE); Ziems, Stefan, 75173 Pforzheim (DE)
(74) Vertreter: Strauss, Peter

(56) Entgegenhaltungen:
- WO-A1-2004/101327
- DE-U1- 29 803 985
- FR-A1- 2 798 339
- GB-A- 2 372 484

## Beschreibung

Die vorliegende Erfindung betrifft ein Verkleidungsteil für die innere Seitenwand, insbesondere die B-Säule, eines Kraftfahrzeuges, mit einer im Einbauzustand nach oben weisenden Kante, auf der der Dachhimmel abgestützt werden kann.
Ferner betrifft die vorliegende Erfindung eine Sicherheitsanordnung für den Innenraum eines Kraftfahrzeuges mit einem aufblasbaren Luftsack und einem solchen Verkleidungsteil für die Seitenwand mit einer nach oben weisenden, den Dachhimmel abstützenden Kante, wobei der aufblasbare Luftsack oberhalb des Verkleidungsteiles angeordnet ist.

Aus dem Stand der Technik sind unterschiedliche Sicherheitsanordnungen für den Innenraum eines Kraftfahrzeuges bekannt, die einen aufblasbaren Luftsack, der Teil eines Airbagmoduls ist, zum Schutz der Fahrzeuginsassen verwenden. So sind insbesondere sogenannte Seitenairbags bekannt, die im Dachhimmel des Kraftfahrzeuges angeordnet sind und sich entlang des Seitenbereiches des Kraftfahrzeuges erstrecken, um im Falle eines Zusammenstoßes in einer den Seitenbereich abdeckenden Weise aufgeblasen zu werden und die Fahrzeuginsassen vor Verletzungen zu schützen.

So beschreibt die EP 0 955 213 B1 ein aufblasbares Kopfschutzsystem für den Seitenbereich eines Kraftfahrzeuges bei dem der gefaltete und nicht aufgeblasene Luftsack entlang des seitlichen Dachholmes angeordnet ist. Um ein gerichtetes Ausbreiten des aufzublasenden Luftsackes zu gewährleisten, sind an der A-Säule und der C-Säule des Kraftfahrzeuges stangenartige Führungseinrichtungen vorgesehen, die sich längs der genannten Säulen erstrecken. Der Luftsack weist wiederum Schlaufen auf, die beweglich um die Stangen gelegt sind. Wird der Luftsack nun durch einen entsprechenden Gasgenerator aufgeblasen, so breitet sich dieser entlang der stangenartigen Führungseinrichtung aus. In einer besonderen Ausführungsform des bekannten Kopfschutzsystems ist der Luftsack ferner in zwei Kammern unterteilt, die miteinander verbunden sind, wobei das Gas des Gasgenerators zunächst in eine Kammer gelangt, die sich im aufgeblasenen Zustand des Luftsackes entlang der stangenartigen Führungseinrichtung erstreckt, so dass der Luftsack anfangs derart aufgeblasen wird, dass er sich zunächst entlang der stangenartigen Führungseinrichtung entfaltet, um anschließend gänzlich aufgeblasen zu werden. Eine weitere Sicherheitsanordnung der vorgenannten Art ist ferner aus der EP 1 384 632 A1 bekannt. Die Anordnung des Luftsackes gegenüber den Verkleidungsteilen der Seitenwand des Kraftfahrzeuges ist nicht beschrieben.

Die DE 101 54 964 A1 offenbart ein Kopfseitenairbagmodul mit einem aufblasbaren Luftsack. Der gefaltete Luftsack ist zusammen mit einer röhrenförmigen Kammer zur Verteilung des Gases entlang des gesamten Luftsackes innerhalb eines Gehäuses angeordnet, das an dem Dachrahmen des Kraftfahrzeuges befestigt ist. Das Gehäuse weist im Wesentlichen eine Führungsleiste auf, die mit einer ersten Seitenwand zur Befestigung des Kopfseitenairbagmoduls an dem Fahrzeug und einer zweiten Seitenwand versehen ist, die sich zwischen dem gefalteten Luftsack und dem Fahrzeuginnenraum erstreckt und der Führung des sich entfaltenden Luftsackes dient. Die Führungsleiste weist ferner eine nach unten weisende Öffnung auf, durch die sich der aufgeblasene Luftsack erstrecken kann. Die Anordnung des Kopfseitenairbagmoduls gegenüber den Verkleidungsteilen der Seitenwand des Kraftfahrzeuges ist nicht beschrieben.

Die DE 101 36 493 A1 offenbart neben einem Verkleidungsteil für die Seitenwand eines Kraftfahrzeuges auch eine Sicherheitsanordnung für den Innenraum eines Kraftfahrzeuges. Die bekannte Sicherheitsanordnung umfasst einen aufblasbaren Luftsack eines Seitenairbagmoduls sowie ein Verkleidungsteil für die Seitenwand des Kraftfahrzeuges. Das Verkleidungsteil verfügt über eine nach oben weisende Kante, auf der der Dachhimmel abgestützt ist. Der gefaltete, aufblasbare Luftsack ist oberhalb des Verkleidungsteiles hinter dem Dachhimmel angeordnet, wobei der gefaltete Luftsack nicht senkrecht oberhalb des Verkleidungsteiles vorgesehen ist, sondern innerhalb des Dachhimmels zur Fahrzeuglängsachse hin verschoben ist, so dass die Ausbreitungsrichtung des aufzublasenden Luftsackes im Fahrzeuginnenraum vor dem Verkleidungsteil verläuft.

Die bekannte Sicherheitsanordnung ist mit unterschiedlichen Nachteilen behaftet. Hier ist insbesondere zu nennen, dass der gefaltete aufblasbare Luftsack innerhalb des Dachhimmels zur Fahrzeuglängsachse hin verschoben angeordnet ist, um eine Kollision des sich ausbreitenden Luftsackes mit den Verkleidungsteilen, insbesondere mit deren nach oben weisender Kante, zu vermeiden. Dies ist wichtig, da die hohen Ausbreitungskräfte des Luftsackes bei einer Kollision mit dem Verkleidungsteil zu einer Beschädigung desselben mit damit einhergehender Splitterbildung führen können, wodurch die Verletzungsgefahr für die Fahrzeuginsassen erhöht ist. Darüber hinaus ist die ordnungsgemäße Ausbreitung des Luftsackes bei einer derartigen Kollision mit dem Verkleidungsteil nicht mehr gewährleistet, so dass der Luftsack seine ihm zugedachte Funktion nicht mehr in der vorgeschriebenen Weise erfüllen kann, wodurch das Verletzungsrisiko weiter erhöht ist. Durch die bekannte Anordnung des gefalteten Luftsackes wird jedoch der Kopfraum der Fahrzeuginsassen eingeengt, so dass deren Bewegungsfreiheit im Kopfraum eingeschränkt ist.

Ein Verkleidungsteil und eine weitere Sicherheitsanordnung mit einem aufblasbaren Luftsack gemäß Oberbegriff der Ansprüche 1 und 7 ist in der GB 2 372 484 A offenbart.

Es ist daher eine Aufgabe der Erfindung, ein Verkleidungsteil für die innere Seitenwand, insbesondere die B-Säule, eines Kraftfahrzeuges mit einer im Einbauzustand nach oben weisenden Kante, auf der der Dachhimmel abstützbar ist, zu schaffen, das auf einfache Weise montiert werden kann.

Diese Aufgabe wird durch die in den Patentansprüchen 1 bzw. 7 angegebenen Merkmale gelöst. Vorteilhafte Ausführungsformen der Erfindung sind Gegenstand der Unteransprüche.

Das erfindungsgemäße Verkleidungsteil für die innere Seitenwand, insbesondere die B-Säule, eines Kraftfahrzeuges ist mit einer im Einbauzustand nach oben weisenden Kante versehen, auf der der Dachhimmel abgestützt werden kann. Erfindungsgemäß ist an der Kante ein Umleitungsabschnitt zum Umleiten eines sich in Richtung der Kante ausbreitenden Luftsackes um die Kante zu der dem Innenraum des Kraftfahrzeuges zuzuwendenden Seite des Verkleidungsteiles vorgesehen.

Um die Montage des Verkleidungsteiles an dem Kraftfahrzeug zu vereinfachen, sind an dem Abschirmabschnitt Haken zum Einhaken des Verkleidungsteiles in Aussparungen in der Seitenwand und/oder dem Dachrahmen des Kraftfahrzeuges vorgesehen. Das Verkleidungsteil muss demzufolge im oberen Bereich lediglich eingehakt werden, so dass dort keine Klippverschlüsse o.ä. gebraucht werden, die einen hohen Fertigungsaufwand bedingen. Im unteren Bereich des Verkleidungsteiles können derartige Klippverschlüsse jedoch zum Einsatz kommen.

Die erfindungsgemäße Sicherheitsanordnung für den Innenraum eines Kraftfahrzeuges weist einen aufblasbaren Luftsack auf. Hierbei kann es sich beispielsweise um den Luftsack eines Seitenairbagmoduls handeln, der hinter dem Dachhimmel des Kraftfahrzeuges angeordnet ist. Ferner weist die erfindungsgemäße Sicherheitsanordnung ein Verkleidungsteil für die Seitenwand des Kraftfahrzeuges auf. Bei dem Verkleidungsteil kann es sich beispielsweise um ein gehäuseartiges Teil handeln, das gegenüber der Seitenwand geöffnet ist und einen Raum für einen Gurthöhenversteller umgibt. An dem Verkleidungsteil ist ferner eine nach oben weisende, den Dachhimmel abstützenden Kante vorgesehen. Der aufblasbare Luftsack ist oberhalb des Verkleidungsteiles angeordnet. Erfindungsgemäß ist die den Dachhimmel abstützende Kante in der Ausbreitungsrichtung des Luftsackes angeordnet. Um jedoch die ordnungsgemäße Funktionsweise des Luftsackes und die Unversehrtheit des Verkleidungsteiles sicherzustellen, ist in Ausbreitungsrichtung des Luftsackes eine Umleitungseinrichtung zum Umleiten des sich ausbreitenden Luftsackes um die Kante in den Innenraum des Kraftfahrzeuges vorgesehen.

Bei der erfindungsgemäßen Sicherheitsanordnung muss der aufblasbare Luftsack nicht zur Kraftfahrzeugmitte hin verschoben angeordnet sein, um eine Kollision mit dem Verkleidungsteil zu vermeiden, sondern kann derart weit zu der Seitenwand verschoben angeordnet sein, dass die Kante in Ausbreitungsrichtung des aufblasbaren Luftsackes liegt, da die Umleitungseinrichtung eine Beschädigung des Verkleidungsteiles und auch ein Verhaken des aufblasbaren Luftsackes im Bereich der nach oben weisenden Kante verhindert. Es kann somit eine Platz sparende Sicherheitsanordnung erzielt werden.

In einer vorteilhaften Ausführungsform der erfindungsgemäßen Sicherheitsanordnung ist die Umleitungseinrichtung in Ausbreitungsrichtung seitlich der Kante angeordnet. Auf diese Weise kann die Umleitungseinrichtung beispielsweise den Bereich zwischen der Kante und der Seitenwand abdecken, so dass der sich ausbreitende Luftsack nicht teilweise in den von dem Verkleidungsteil eingeschlossenen Raum erstreckt und sich somit verhakt. Vielmehr kann durch die derart angeordnete Umleitungseinrichtung sichergestellt werden, dass der Luftsack über die Kante in den Innenraum des Kraftfahrzeuges gleitet, ohne dass die Kante beschädigt wird.

Gemäß einer weiteren vorteilhaften Ausführungsform der erfindungsgemäßen Sicherheitsanordnung ist die Umleitungseinrichtung in Ausbreitungsrichtung vor der Kante angeordnet. Bei dieser Ausführungsform gelangt der sich ausbreitende Luftsack folglich gar nicht oder nur seitlich an die Kante, so dass eine Kollision weitgehend vermieden ist.

In einer besonders bevorzugten Ausführungsform der erfindungsgemäßen Sicherheitsanordnung ist die Umleitungseinrichtung wandartig ausgebildet. Die wandartige Ausbildung ermöglicht zum einen eine leichte Bauweise der Umleitungseinrichtung und zum anderen ein sicheres Umleiten des sich ausbreitenden Luftsackes.

Um ein gerichtetes Umleiten des sich ausbreitenden Luftsackes vor oder an der Kante sicherzustellen, weist die Umleitungseinrichtung in einer bevorzugten Ausführungsform der erfindungsgemäßen Sicherheitsanordnung mindestens einen Umleitungsabschnitt auf, der sich quer zu der Ausbreitungsrichtung des Luftsackes erstreckt. So können beispielsweise mehrere hintereinander liegende Umleitungsabschnitte vorgesehen sein, um ein stufenweises Umleiten des Luftsackes zu erreichen. Der Umleitungsabschnitt kann sich auch in einem rechten Winkel zu der Ausbreitungsrichtung erstrecken, wobei nachstehende Ausführungsform zu bevorzugen ist. Der quer zu der Kante ausgerichtete Umleitungsabschnitt kann ferner eine zusätzliche Stützfläche für den Dachhimmel bieten, so dass der Dachhimmel sicher auf dem Verkleidungsteil abgestützt ist.

Um ein besonders einfaches Abgleiten des sich ausbreitenden Luftsackes an oder vor der Kante zu ermöglichen, erstreckt sich der Umleitungsabschnitt in einer besonders bevorzugten Ausführungsform der erfindungsgemäßen Sicherheitsanordnung schräg zu der Ausbreitungsrichtung des Luftsackes. Dies umfasst jegliche Ausrichtung in einem Winkel zwischen 0° und 90°.

In einer weiteren bevorzugten Ausführungsform der erfindungsgemäßen Sicherheitsanordnung weist die Umleitungseinrichtung ferner einen Abschirmungsabschnitt auf, der zwischen der Seitenwand und/oder dem Dachrahmen und dem Ausbreitungsbereich des Luftsackes angeordnet ist. Unter dem Ausbreitungsbereich ist hierbei der Bereich zu verstehen, in den sich der Luftsack beim Aufblasen ausbreitet, ohne den Bereich, in dem der gefaltete Luftsack angeordnet ist. Der Abschirmungsabschnitt verhindert demzufolge ein Ausbreiten des Luftsackes in Richtung der Seitenwand bzw. des Dachrahmens. Der Abschirmungsabschnitt kann sowohl unabhängig von als auch zusammen mit dem Umleitungsabschnitt ausgebildet sein.

In einer besonders bevorzugten Ausführungsform der erfindungsgemäßen Sicherheitsanordnung erstreckt sich der Abschirmungsabschnitt ferner zwischen den gefalteten Luftsack und die Seitenwand und/oder den Dachrahmen. Dies hat den Vorteil, das bei einer durch einen Seitenaufprall auftretenden Verschiebung des Abschirmungsabschnittes in Richtung des Fahrzeuginnenraumes der Abschirmungsabschnitt gegen den gefalteten Luftsack gedrückt wird und diesen mitnimmt, so dass der gefaltete Luftsack nicht hinter den Umleitungs- oder Abschirmungsabschnitt gelangt, wo er sich nicht ordnungsgemäß entfalten könnte.

Um ein besonders sicheres Abgleiten des sich ausbreitenden Luftsackes an dem Umleitungsabschnitt zu gewährleisten, weist dieser in einer weiteren bevorzugten Ausführungsform der erfindungsgemäßen Sicherheitsanordnung eine Querschnittsform auf, bei der sich der Grad der Umleitung des sich ausbreitenden Luftsackes in Ausbreitungsrichtung verändert.

Vorzugsweise weist der Umleitungsabschnitt eine bogenförmige Querschnittsform auf.

Da sich die größten Probleme zwischen Verkleidungsteil und ausbreitendem Luftsack im Bereich der B-Säule des Kraftfahrzeuges ergeben, ist das Verkleidungsteil in einer bevorzugten Ausführungsform der erfindungsgemäßen Sicherheitsanordnung ein Verkleidungsteil für die B-Säule des Kraftfahrzeuges.

In einer weiteren vorteilhaften Ausführungsform der erfindungsgemäßen Sicherheitsanordnung ist die Umleitungseinrichtung teilweise oder gänzlich an der Seitenwand und/oder dem Dachrahmen des Kraftfahrzeuges angeordnet. So kann beispielsweise der Umleitungsabschnitt an dem Verkleidungsteil und der Abschirmabschnitt an der Seitenwand oder dem Dachrahmen, also der Karosserie, befestigt sein.

Um eine hohe Stabilität und eine gute Befestigbarkeit der Umleitungseinrichtung an der Karosserie zu gewährleisten, besteht diese in einer weiteren bevorzugten Ausführungsform der erfindungsgemäßen Sicherheitsanordnung teilweise oder gänzlich aus Blech. Um eine leichte Bauweise zu erreichen, besteht die Umleitungseinrichtung vorzugsweise aus Aluminiumblech.

In einer weiteren bevorzugten Ausführungsform der erfindungsgemäßen Sicherheitsanordnung ist die Umleitungseinrichtung zumindest teilweise, vorzugsweise gänzlich, an dem Verkleidungsteil angeordnet. Insbesondere bei der gänzlichen Anordnung der Umleitungseinrichtung an dem Verkleidungsteil ist die Montage vereinfacht, weil einerseits die Umleitungseinrichtung zusammen mit dem Verkleidungsteil eingebaut werden kann und andererseits keine Ausrichtungsprobleme zwischen beispielsweise dem Abschirmabschnitt und dem Umleitungsabschnitt der Umleitungseinrichtung berücksichtigt werden müssen.

In einer weiteren vorteilhaften Ausführungsform der erfindungsgemäßen Sicherheitsanordnung ist der Umleitungsabschnitt an der nach oben weisenden, den Dachhimmel abstützenden Kante angeordnet. So kann sich der Umleitungsabschnitt beispielsweise entlang der Kante erstrecken und ein Abgleiten des sich ausbreitenden Luftsackes an oder vor der Kante ermöglichen.

In einer besonders bevorzugten Ausführungsform der erfindungsgemäßen Sicherheitsanordnung schließt sich ein Aufnahmeabschnitt mit einer zum Innenraum des Kraftfahrzeuges weisenden Nut, in der der Rand des Dachhimmels aufgenommen werden kann, an den Umleitungsabschnitt an, so dass eine sichere Anordnung des Dachhimmels an dem Verkleidungsteil möglich ist.

Um eine stufenweise Umleitung des sich ausbreitenden Luftsackes zu ermöglichen, schließt sich in einer weiteren bevorzugten Ausführungsform der erfindungsgemäßen Sicherheitsanordnung ein zweiter Umleitungsabschnitt an den Aufnahmeabschnitt an. So kann die Umleitung auf mehrere Umleitungsabschnitte verteilt werden, die den Luftsack jeweils nur ein Stück in die gewünschte Richtung umleiten. Auf diese Weise werden die einzelnen Umleitungsabschnitte nicht so stark belastet.

In einer weiteren bevorzugten Ausführungsform der erfindungsgemäßen Sicherheitsanordnung schließt sich der Abschirmabschnitt an den Umleitungsabschnitt, den Aufnahmeabschnitt oder den zweiten Umleitungsabschnitt an.

Um eine Beschädigung der Umleitungseinrichtung sowie der Kante an dem Verkleidungsteil weiterhin auszuschließen, ist in dem Übergangsbereich zwischen der Kante und dem Umleitungsabschnitt und/oder dem Übergangsbereich zwischen dem Umleitungsabschnitt und dem Abschirmungsabschnitt in einer besonders bevorzugten Ausführungsform der erfindungsgemäßen Sicherheitsanordnung mindestens eine Versteifungsrippe auf der dem Innenraum des Kraftfahrzeuges abgewandten Seite des Verkleidungsteiles angeordnet.

In einer besonders bevorzugten Ausführungsform der erfindungsgemäßen Sicherheitsanordnung ist die Umleitungseinrichtung teilweise oder gänzlich einstückig mit dem Verkleidungsteil ausgebildet ist. So ist beispielsweise die Montage der Umleitungseinrichtung bei einer gänzlich einstückigen Ausbildung stark vereinfacht.

In einer bevorzugten Ausführungsform des erfindungsgemäßen Verkleidungsteiles erstreckt sich der Umleitungsabschnitt quer, vorzugsweise schräg, zu der Kante.

In einer weiteren bevorzugten Ausführungsform des erfindungsgemäßen Verkleidungsteiles erstreckt sich der Umleitungsabschnitt ausgehend von der Kante zu der dem Innenraum des Kraftfahrzeuges abzuwendenden Seite des Verkleidungsteiles. Auf diese Weise wird verhindert, dass sich der Luftsack in den Bereich zwischen dem Verkleidungsteil und der Seitenwand ausbreitet.

In einer weiteren bevorzugten Ausführungsform des erfindungsgemäßen Verkleidungsteiles schließt sich ein Aufnahmeabschnitt mit einer Nut, in der der Rand des Dachhimmels aufgenommen werden kann, an den Umleitungsabschnitt an. So kann der Aufnahmeabschnitt beispielsweise im Querschnitt U-förmig ausgebildet sein, um die vorstehend genannte Nut zu erhalten.

In einer weiteren bevorzugten Ausführungsform des erfindungsgemäßen Verkleidungsteiles schließt sich ein zweiter Umleitungsabschnitt an den Aufnahmeabschnitt an. Für den zweiten Umleitungsabschnitt können die vorteilhaften Ausgestaltungen des ersten Umleitungsabschnittes entsprechend übernommen werden.

In einer weiteren bevorzugten Ausführungsform des erfindungsgemäßen Verkleidungsteiles schließt sich ein im Einbauzustand nach oben ragender Abschirmabschnitt an den Umleitungsabschnitt, den Aufnahmeabschnitt oder den zweiten Umleitungsabschnitt an.

In einer besonders bevorzugten Ausführungsform des erfindungsgemäßen Verkleidungsteiles ist in dem Übergangsbereich zwischen der Kante und dem Umleitungsabschnitt und/oder dem Übergangsbereich zwischen dem Umleitungsabschnitt und dem Abschirmungsabschnitt mindestens eine Versteifungsrippe auf der dem Innenraum des Kraftfahrzeuges abzuwendenden Seite des Verkleidungsteiles angeordnet.

Um das Einführen der Haken in die Aussparungen zu erleichtern, weisen die Haken in einer besonders bevorzugten Ausführungsform des erfindungsgemäßen Verkleidungsteiles einen konischen Einführungsabschnitt auf.

In einer weiteren besonders bevorzugten Ausführungsform des erfindungsgemäßen Verkleidungsteiles sind die Haken derart ausgebildet, dass das Verkleidungsteil von einer ersten Position, in der die Haken in die Aussparungen eingeführt oder aus diesen herausgenommen werden können, in die Endposition an der Seitenwand des Kraftfahrzeuges verschwenkt werden kann, in der die Haken in den Aussparungen befestigt sind. Unter der Endposition ist hierbei die endgültige Lage des Verkleidungsteiles innerhalb des Kraftfahrzeuges zu verstehen. Die Montage des Verkleidungsteiles ist demzufolge stark vereinfacht.

Bezüglich der weiteren Vorteile des erfindungsgemäßen Verkleidungsteiles sei auf die zuvor beschriebenen Vorteile der entsprechenden erfindungsgemäßen Sicherheitsanordnung verwiesen. Es sei weiterhin angemerkt, dass auch eine wandartige Ausbildung der Umleiteinrichtung sowie deren einstückige Ausbildung mit dem erfindungsgemäßen Verkleidungsteil als vorteilhafte Ausführungsform anzusehen ist.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden an Hand mehrerer Ausführungsbeispiele unter Bezugnahme auf die zugehörigen Zeichnungen näher erläutert. Es zeigen:
- Fig. 1: die Vorderansicht einer Sicherheitsanordnung in geschnittener Darstellung,
- Fig. 2: die Vorderansicht einer Sicherheitsanordnung in geschnittener Darstellung,
- Fig. 3: die Vorderansicht einer Sicherheitsanordnung in geschnittener Darstellung,
- Fig. 4: die Vorderansicht einer Sicherheitsanordnung in geschnittener Darstellung,
- Fig. 5: die Vorderansicht einer Sicherheitsanordnung in geschnittener Darstellung,
- Fig. 6: die perspektivische Darstellung einer Ausführungsform des erfindungsgemäßen Verkleidungsteiles und
- Fig. 7: eine vergrößerte Darstellung der Umleitungseinrichtung des Verkleidungsteiles von Fig. 6.
Nur die Figuren 6 und 7 zeigen eine Ausführungsform eines erfindungsgemäßen Verkleidungsteiles.

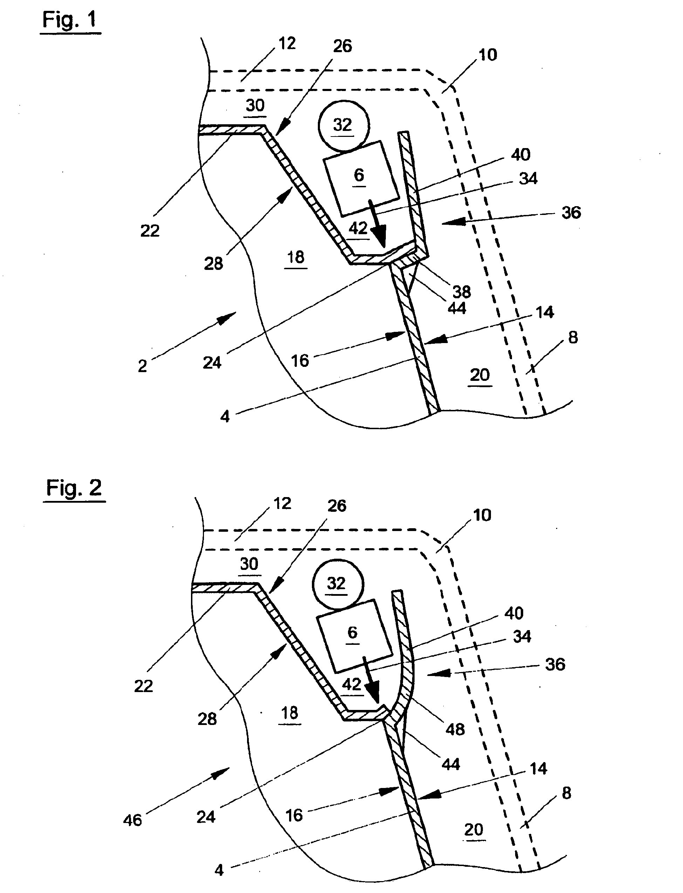

Fig. 1 zeigt eine Sicherheitsanordnung 2 für den Innenraum eines Kraftfahrzeuges. Die Sicherheitsanordnung 2 umfasst im Wesentlichen ein Verkleidungsteil 4 und einen gefalteten aufblasbaren Luftsack 6.

Das Verkleidungsteil 4 dient der Verkleidung der Seitenwand 8 der Kraftfahrzeuges, wobei die Seitenwand 8 zusammen mit dem Dachrahmen 10 und dem Dach 12 des Kraftfahrzeuges an Hand einer gestrichelten Linie in Fig. 1 angedeutet ist. Im vorliegenden Beispiel handelt es sich bei der Seitenwand 8 um die B-Säule des Kraftfahrzeuges. Das sich entlang der Seitenwand 8 erstreckende Verkleidungsteil 4 weist eine der Seitenwand 8 zugewandte Seite 14 und eine der Seitenwand 8 abgewandte Seite 16 auf, wobei letztere dem Innenraum 18 des Kraftfahrzeuges zugewandt ist. Zwischen der der Seitenwand 8 zugewandten Seite 14 und der Seitenwand 8 ist ein Raum 20 ausgebildet, der beispielsweise für die Aufnahme eines Gurthöhenverstellers (nicht dargestellt) genutzt werden kann.

Das Verkleidungsteil 4 weist ferner eine nach oben weisende, einen Dachhimmel 22 abstützende Kante 24 auf. Der Dachhimmel 22 erstreckt sich flächig unterhalb des Daches 12 und weist eine dem Dach 12 zugewandte Seite 26 und eine dem Dach abgewandte Seite 28 auf, wobei letztere dem Innenraum 18 des Kraftfahrzeuges zugewandt ist. Zwischen der dem Dach 12 zugewandten Seite 26 des Dachhimmels 22 und dem Dach 12 ist ein Raum 30 ausgebildet.

Der gefaltete aufblasbare Luftsack 6 erstreckt sich in Längsrichtung des Kraftfahrzeuges, nämlich in dessen Seitenbereich, entlang der Seitenwand 8 bzw. des Dachrahmens 10. Es ist ferner ein Gasgenerator 32 vorgesehen, der den aufblasbaren Luftsack 6 im Falle eines Aufpralls des Kraftfahrzeuges aufbläst. Es handelt sich bei der dargestellten Ausführungsform somit um einen Seitenairbag. Der aufblasbare Luftsack 6 ist zusammen mit dem Gasgenerator 32 im dem Raum 30 zwischen dem Dachhimmel 22 und dem Dach 12 und oberhalb des Verkleidungsteiles 4 angeordnet. Dabei ist der aufblasbare Luftsack 6 derart positioniert, dass die nach oben weisende, den Dachhimmel 22 abstützende Kante 24 in der Ausbreitungsrichtung des aufblasbaren Luftsackes 6 angeordnet ist, die in Fig. 1 an Hand des Pfeils 34 dargestellt ist.

In der Ausbreitungsrichtung 34 des aufblasbaren Luftsackes 6 ist ferner eine Umleitungseinrichtung 36 zum Umleiten des sich ausbreitenden Luftsackes 6 um die Kante 24 in den Innenraum 18 des Kraftfahrzeuges vorgesehen. Die Umleitungseinrichtung 36 ist in der Art einer Wand ausgebildet und - wie aus Fig. 1 ersichtlich - in Ausbreitungsrichtung 34 seitlich der Kante 24 angeordnet, so dass der zwischen dem Verkleidungsteil 4 und der Seitenwand 8 ausgebildete Raum 20 nach oben zumindest teilweise durch die Umleitungseinrichtung 36 verdeckt ist, wodurch ein Eindringen des sich ausbreitenden Luftsackes 6 in den Raum 20 verhindert werden kann. Die Umleitungseinrichtung 36 ist an dem Verkleidungsteil 4 angeordnet und einstückig mit diesem ausgebildet.

Die Umleitungseinrichtung 36 weist mehrere Abschnitte auf, wobei ein Umleitungsabschnitt 38 vorgesehen ist, der unmittelbar an der Kante 24 angeordnet ist bzw. sich an diese anschließt. Der in der dargestellten Ausführungsform gerade ausgebildete Umleitungsabschnitt 38 erstreckt sich quer zur Ausbreitungsrichtung 34 des aufblasbaren Luftsackes 6 ausgehend von der Kante in Richtung der Seitenwand 8, wobei eine gegenüber der Ausbreitungsrichtung 34 schräge Anordnung gewählt ist, um ein problemloses Abgleiten des sich ausbreitenden Luftsackes 6 an dem Umleitungsabschnitt 38 zu gewährleisten.

An dem der Kante 24 abgewandten Ende des Umleitungsabschnittes 38 ist ein Abschirmungsabschnitt 40 vorgesehen, der sich winklig an den Umleitungsabschnitt 38 anschließt. Der Abschirmungsabschnitt 40 erstreckt sich nach oben zwischen die Seitenwand 8 bzw. den Dachrahmen 10 und einen Ausbreitungsbereich des aufblasbaren Luftsackes 6, wobei der Ausbreitungsbereich in Fig. 1 mit dem Bezugszeichen 42 gekennzeichnet ist. Darüber hinaus erstreckt sich der Abschirmungsabschnitt 40 bis zwischen den gefalteten Luftsack 6 und die Seitenwand 8 bzw. den Dachrahmen 10.

Bei einem Seitenaufprall des Kraftfahrzeuges würde der Seitenairbag aktiviert, so dass der Gasgenerator 32 den gefalteten aufblasbaren Luftsack 6 aufbläst. Dieser breitet sich daraufhin in Ausbreitungsrichtung 34 aus. Der Abschirmungsabschnitt 40 verhindert, dass sich der Luftsack 6 in Richtung der Seitenwand 8 ausbreitet und in den Raum 20 hinter dem Verkleidungsteil 4 gerät. Anschließend trifft der sich ausbreitende Luftsack 6 auf den Umleitungsabschnitt 38, der den sich ausbreitenden Luftsack 6 um die Kante 24 in den Innenraum 18, d.h. zu der Seite 16 des Verkleidungsteiles 4, leitet. Der Dachhimmel 22 reißt in diesem Bereich auf, so dass sich der Luftsack 6 ungestört ausbreiten kann. Um den Umleitungsabschnitt 38 zu versteifen, so dass dieser den großen Ausbreitungskräften des Luftsackes 6 standhalten kann, ist im Übergangsbereich zwischen der Kante 24 und dem Umleitungsabschnitt 38 mindestens eine Versteifungsrippe 44 auf der der Seitenwand 8 zugewandten Seite 14 des Verkleidungsteiles 4 vorgesehen. Eine entsprechende Versteifungsrippe ist auch in dem Übergangsbereich zwischen dem Umleitungsabschnitt 38 und dem Abschirmungsabschnitt 40 vorgesehen, wobei auf deren Darstellung in Fig. 1 verzichtet wurde.

Fig. 2 zeigt eine weitere Sicherheitsanordnung 46 für den Innenraum eines Kraftfahrzeuges. Es werden für gleiche Teile die gleichen Bezugszeichen verwendet, wobei diesbezüglich auf die vorangehende Beschreibung verwiesen werden kann.

In der Sicherheitsanordnung 46 weist der Umleitungsabschnitt 48 eine bogenartige Querschnittsform auf. Die bogenförmige Querschnittsform des Umleitungsabschnittes 48 bewirkt, dass sich der Grad der Umleitung des sich ausbreitenden Luftsackes 6 in Ausbreitungsrichtung 34 verändert. Dies bedeutet in der dargestellten Ausführungsform, dass die Umleitung des Luftsackes 6 in einem der Kante 24 abgewandten Bereich des Umleitungsabschnittes 48 geringer als in einem Bereich des Umleitungsabschnittes 48 ist, der näher an der Kante 24 angeordnet ist. Die dargestellte Variante der Querschnittsform des Umleitungsabschnittes 48 ermöglicht ein besonders leichtes Abgleiten des sich ausbreitenden Luftsackes an dem Umleitungsabschnitt 48, ohne dass es zu einer Beschädigung des Verkleidungsteiles 4 kommt.

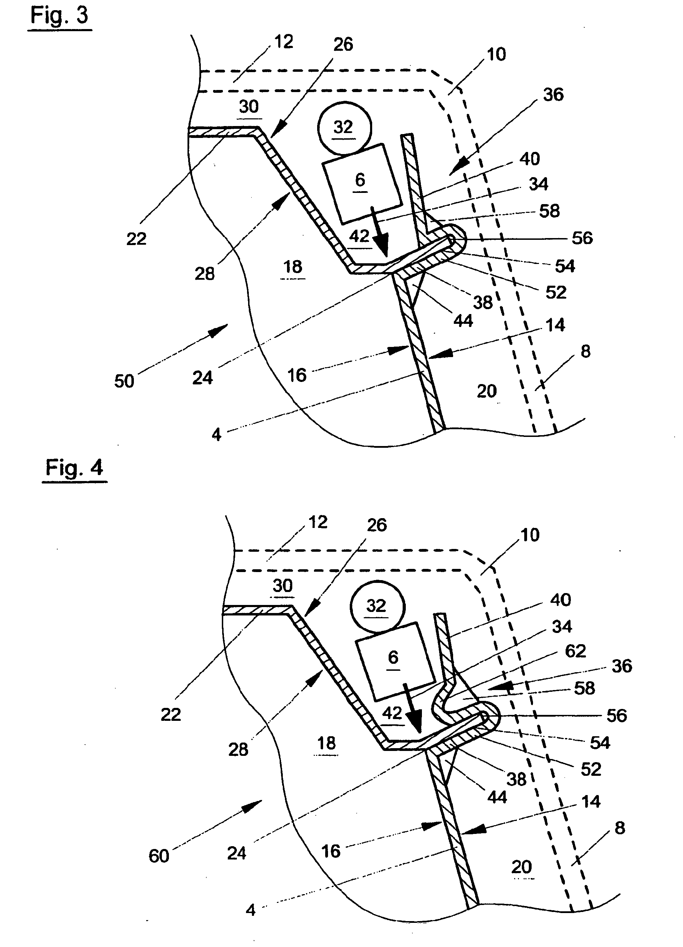

Fig. 3 zeigt eine Sicherheitsanordnung 50 für den Innenraum eines Kraftfahrzeuges, . Es werden für gleiche Teile die gleichen Bezugszeichen verwendet, so dass die vorangehende Beschreibung entsprechend gilt.

In der Sicherheitsanordnung 50 ist zwischen dem Umleitungsabschnitt 38 und dem Abschirmungsabschnitt 40 ein Aufnahmeabschnitt 52 vorgesehen. Der Aufnahmeabschnitt 52 weist einen im Wesentlichen U-förmigen Querschnitt auf, der öffnungsseitig in Richtung des Innenraumes 18 des Kraftfahrzeuges weist. Die somit in dem Aufnahmeabschnitt 52 ausgebildete Nut 54, die zum Innenraum 18 des Kraftfahrzeuges weist, dient der Aufnahme des Randes 56 des Dachhimmels 22. Der Aufnahmeabschnitt 52 erstreckt sich ausgehend von dem Umleitungsabschnitt 38 weiter in Richtung der Seitenwand 8 nach außen, um nach einem U-förmigen Verlauf unmittelbar an den Abschirmungsabschnitt 40 anzuschließen. Im Übergangsbereich zwischen dem Aufnahmeabschnitt 52 und dem Abschirmungsabschnitt 40 ist eine weitere Versteifungsrippe 58 auf der dem Innenraum 18 abgewandten Seite der Umleitungseinrichtung 36 vorgesehen.

Fig. 4 zeigt eine Sicherheitsanordnung 60 für den Innenraum eines Kraftfahrzeuges. Es werden für gleiche Teile die gleichen Bezugszeichen verwendet, wobei diesbezüglich auf die vorangehende Beschreibung verwiesen sein soll, die entsprechend gilt.

In der Sicherheitsanordnung 60 ist ein zweiter Umleitungsabschnitt 62 vorgesehen, der sich an den Aufnahmeabschnitt 52 einerseits und den Abschirmungsabschnitt 40 andererseits anschließt. Der zweite Umleitungsabschnitt 62 ist bogenförmig in den Ausbreitungsbereich 42 des Luftsackes 6 gewölbt. Die Versteifungsrippe 58 erstreckt sich ausgehend von dem Aufnahmeabschnitt 52 über den zweiten Umleitungsabschnitt 62 bis zu dem Abschirmungsabschnitt 40. Die vierte Ausführungsform hat den Vorteil, dass das Umleiten stufenweise über den zweiten Umleitungsabschnitt 62 und anschließend über den ersten Umleitungsabschnitt 38 erfolgt, so dass die einzelnen Bestandteile der Umleitungseinrichtung 36 nicht so stark belastet werden.

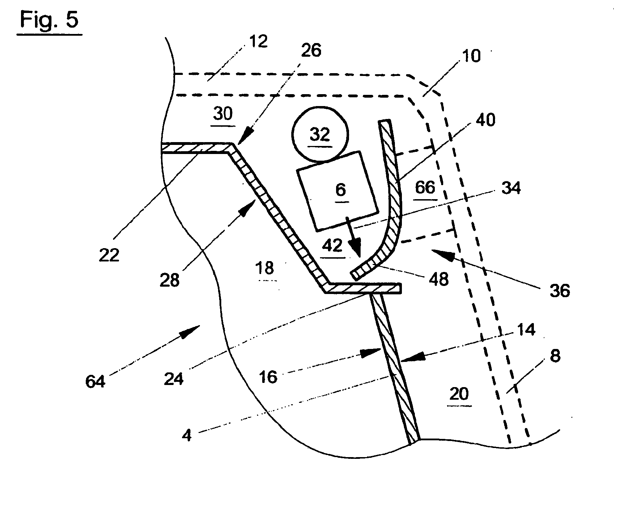

Fig. 5 zeigt Sicherheitsanordnung 64 für den Innenraum eines Kraftfahrzeuges. Es werden für gleiche Teile die gleichen Bezugszeichen verwendet, wobei diesbezüglich auf die vorangehende Beschreibung verwiesen werden kann.

Die Umleitungseinrichtung 36 in der dargestellten Ausführungsform ist nicht einstückig mit dem Verkleidungsteil 4 ausgebildet und auch nicht an diesem angeordnet. Die Umleitungseinrichtung 36 ist vielmehr an der Seitenwand 8 oder dem Dachrahmen 10 des Kraftfahrzeuges angeordnet, wie dies an Hand der gestrichelt dargestellten Strebe 66 in Fig. 5 angedeutet ist. Die Umleitungseinrichtung 36 besteht aus einem Aluminiumblech, das über die Strebe mit der Seitenwand 8 oder dem Dachrahmen verschweißt ist. Die Umleitungseinrichtung 36 kann jedoch auch einstückig mit der Seitenwand 8 oder dem Dachrahmen 10 hergestellt sein.

Ein weiteres besonderes Merkmal dieser Ausführungsform besteht darin, dass die Umleitungseinrichtung 36 in Ausbreitungsrichtung 34 vor der Kante 24 und von dieser beabstandet angeordnet ist. So ist der Umleitungsabschnitt 48 derart in den Ausbreitungsbereich 42 versetzt angeordnet, dass der sich ausbreitende Luftsack 6 nicht in Berührung mit der Kante 24, die den Dachhimmel 22 abstützt, kommen kann, wodurch die Beschädigung des Verkleidungsteiles 4 gänzlich ausgeschlossen ist.

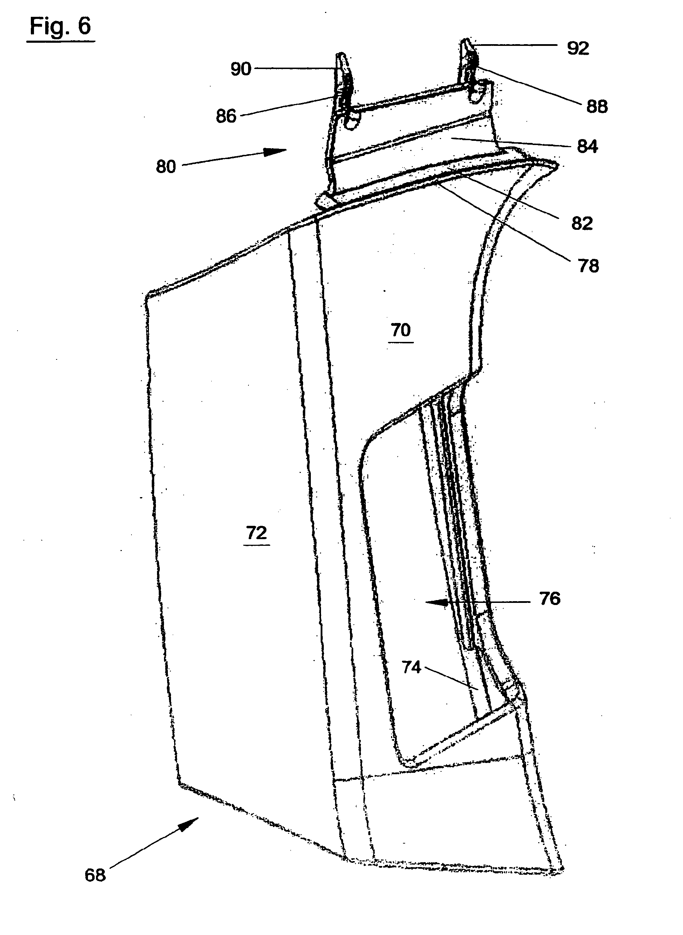

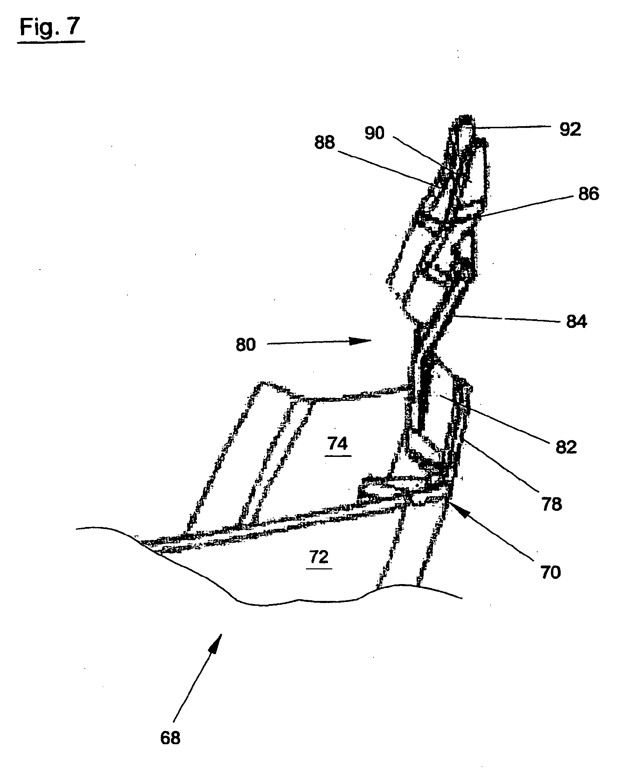

Die Fig. 6 und 7 zeigen eine Ausführungsform des erfindungsgemäßen Verkleidungsteiles 68 in perspektivischer Darstellung.

Das dargestellte Verkleidungsteil 68 ist ein B-Säulen-Verkleidungsteil und weist eine Vorderwand 70 auf, an die sich seitlich zwei angewinkelte Seitenwände 72, 74 anschließen. In der Vorderwand 70 ist ferner eine Aussparung 76 vorgesehen, die für eine Einrichtung (nicht dargestellt) zur Gurthöhenverstellung genutzt werden kann. Das Verkleidungsteil 68 hat eine im Einbauzustand nach oben weisende Kante 78 auf der der Dachhimmel (nicht dargestellt) im Einbauzustand abgestützt werden kann.

An der Kante 78 ist eine Umleitungseinrichtung 80 vorgesehen, die einen Umleitungsabschnitt 82 zum Umleiten eines sich in Richtung der Kante 78 ausbreitenden Luftsackes (nicht dargestellt) um die Kante 78 zu der dem Innenraum des Kraftfahrzeuges zugewandten Seite des Verkleidungsteiles 68 aufweist. Der wandartige Umleitungsabschnitt 82 erstreckt sich schräg zu der Kante 78 bzw. der Vorderwand 70 und schließt sich seitlich an die Kante 78 an. Ausgehend von der Kante 78 erstreckt sich der Umleitungsabschnitt 82 zu der dem Innenraum des Kraftfahrzeuges abgewandten Seite des Verkleidungsteiles 68.

An den Umleitungsabschnitt 82 schließt sich ein im Einbauzustand nach oben ragender Abschirmungsabschnitt 84 an, der ebenfalls wandartig ausgebildet ist und in der vorliegenden Ausführungsform zwei Abschnitte mit unterschiedlicher Neigung umfasst. An dem nach oben weisenden Ende des Abschirmungsabschnittes sind zwei Haken 86, 88 zum Einhaken des Verkleidungsteiles 68 in nicht dargestellte Aussparungen in der Seitenwand oder dem Dachrahmen des Kraftfahrzeuges angeordnet. Dank der Haken 86, 88 muss das Verkleidungsteil 68 an seinem oberen Ende lediglich eingehakt werden, was die Montage vereinfacht. Zur Erleichterung der Einführung der Haken 86, 88 in die Aussparungen, weisen die Haken 86, 88 je einen konisch verlaufenden Einführungsabschnitt 90, 92 auf.

Die Haken 86, 88 sind dabei derart ausgebildet, dass das Verkleidungsteil 68 von einer ersten, geneigten Position, in der die Haken 86, 88 in die Aussparungen eingeführt oder aus diesen herausgenommen werden können, in die in Fig. 6 dargestellte Endposition an der Seitenwand des Kraftfahrzeuges verschwenkt werden kann, in der die Haken 86, 88 in den Aussparungen befestigt sind.

## Patentansprüche

1. Verkleidungsteil für die innere Seitenwand, insbesondere die B-Säule, eines Kraftfahrzeuges mit einer im Einbauzustand nach oben weisenden Kante (78), auf der der Dachhimmel abstützbar ist, wobei an der Kante (78) ein Umleitungsabschnitt (82) zum Umleiten eines sich in Richtung der Kante (78) ausbreitenden Luftsackes um die Kante (78) zu der dem Innenraum des Kraftfahrzeuges zugewandten Seite des Verkleidungsteiles (68) vorgesehen ist, an den sich ein im Einbauzustand nach oben ragender Abschirmungsabschnitt (84) anschließt, **dadurch gekennzeichnet, dass** an dem Abschirmungsabschnitt (84) Haken (86, 88) zum Einhaken des Verkleidungsteiles (68) in Aussparungen in der Seitenwand und/oder dem Dachrahmen eines Kraftfahrzeuges vorgesehen sind.

2. Verkleidungsteil nach Anspruch 1, **dadurch gekennzeichnet, dass** sich der Umleitungsabschnitt (82) quer, vorzugsweise schräg, zu der Kante (78) erstreckt.

3. Verkleidungsteil nach einem der Ansprüche 1 oder 2, **dadurch gekennzeichnet, dass** sich der Umleitungsabschnitt (82) ausgehend von der Kante (78) zu der dem Innenraum des Kraftfahrzeuges abgewandten Seite des Verkleidungsteiles (68) erstreckt.

4. Verkleidungsteil nach einem der Ansprüche 1 bis 3, **dadurch gekennzeichnet, dass** in dem Übergangsbereich zwischen der Kante (78) und dem Umleitungsabschnitt (82) und/oder dem Übergangsbereich zwischen dem Umleitungsabschnitt (82) und dem Abschirmungsabschnitt (84) mindestens eine Versteifungsrippe auf der dem Innenraum abgewandten Seite des Verkleidungsteiles (68) angeordnet ist.

5. Verkleidungsteil nach einem der Ansprüche 1 bis 4, **dadurch gekennzeichnet, dass** die Haken (86, 88) einen konischen Einführungsabschnitt (90, 92) zur Erleichterung der Einführung des Hakens (86; 88) in die Aussparungen aufweisen.

6. Verkleidungsteil nach einem der vorangehenden Ansprüche, **dadurch gekennzeichnet, dass** die Haken (86, 88) derart ausgebildet sind, dass das Verkleidungsteil (68) von einer ersten Position, in der die Haken (86, 88) in die Aussparungen eingeführt oder aus diesen herausgenommen werden können, in die Endposition an der Seitenwand des Kraftfahrzeuges verschwenkbar ist, in der die Haken (86, 88) in den Aussparungen befestigt sind.

7. Sicherheitsanordnung für den Innenraum eines Kraftfahrzeuges mit einem aufblasbaren Luftsack (6) und einem Verkleidungsteil (68) für die Seitenwand (8) mit einer nach oben weisenden, den Dachhimmel (22) abstützenden Kante (78), wobei der aufblasbare Luftsack (6) oberhalb des Verkleidungsteiles (68) und die Kante (78) in der Ausbreitungsrichtung (34) des Luftsackes (6) angeordnet ist, wobei in Ausbreitungsrichtung (34) eine Umleitungseinrichtung (80) zum Umleiten des sich ausbreitenden Luftsackes (6) um die Kante (78) in den Innenraum (18) des Kraftfahrzeuges vorgesehen ist, **dadurch gekennzeichnet, dass** das Verkleidungsteil (68) ein Verkleidungsteil (68) nach einem der Ansprüche 1 bis 6 ist.

8. Sicherheitsanordnung nach Anspruch 7, **dadurch gekennzeichnet, dass** die Umleitungseinrichtung (80) in Ausbreitungsrichtung (34) seitlich der Kante (78) angeordnet ist.

9. Sicherheitsanordnung nach einem der Ansprüche 7 oder 8, **dadurch gekennzeichnet, dass** die Umleitungseinrichtung (80) in Ausbreitungsrichtung (34) vor der Kante (78) angeordnet ist.

10. Sicherheitsanordnung nach einem der Ansprüche 7 bis 9, **dadurch gekennzeichnet, dass** die Umleitungseinrichtung (80) wandartig ausgebildet ist.

11. Sicherheitsanordnung nach einem der Ansprüche 7 bis 10, **dadurch gekennzeichnet, dass** die Umleitungseinrichtung (80) mindestens einen Umleitungsabschnitt (82) aufweist, der sich quer zu der Ausbreitungsrichtung (34) des Luftsackes (6) erstreckt.

12. Sicherheitsanordnung nach Anspruch 11, **dadurch gekennzeichnet, dass** sich der Umleitungsabschnitt (82) schräg zu der Ausbreitungsrichtung (34) des Luftsackes (6) erstreckt.

13. Sicherheitsanordnung nach einem der Ansprüche 11 oder 12, **dadurch gekennzeichnet, dass** die Umleitungseinrichtung (80) ferner einen Abschirmungsabschnitt (84) aufweist, der zwischen der Seitenwand (8) und/oder dem Dachrahmen (10) und dem Ausbreitungsbereich (42) des Luftsackes (6) angeordnet ist.

14. Sicherheitsanordnung nach Anspruch 13, **dadurch gekennzeichnet, dass** sich der Abschirmungsabschnitt (84) ferner zwischen den gefalteten Luftsack (6) und die Seitenwand (8) und/oder den Dachrahmen (10) erstreckt.

15. Sicherheitsanordnung nach einem der Ansprüche 11 bis 14, **dadurch gekennzeichnet, dass** der Umleitungsabschnitt (48) eine Querschnittsform aufweist, bei der sich der Grad der Umleitung des sich ausbreitenden Luftsackes (6) in Ausbreitungsrichtung (34) verändert.

16. Sicherheitsanordnung nach Anspruch 15, **dadurch gekennzeichnet, dass** der Umleitungsabschnitt (48) eine bogenförmige Querschnittsform aufweist.

17. Sicherheitsanordnung nach einem der Ansprüche 7 bis 16, **dadurch gekennzeichnet, dass** das Verkleidungsteil (68) ein B-Säulen-Verkleidungsteil ist.

18. Sicherheitsanordnung nach einem der Ansprüche 7 bis 17, **dadurch gekennzeichnet, dass** die Umleitungseinrichtung (80) zumindest teilweise, vorzugsweise gänzlich, an dem Verkleidungsteil (4; 68) angeordnet ist.

19. Sicherheitsanordnung nach Anspruch 18, **dadurch gekennzeichnet, dass** der Umleitungsabschnitt (82) an der nach oben weisenden, den Dachhimmel (22) abstützenden Kante (78) angeordnet ist.

20. Sicherheitsanordnung nach Anspruch 19, **dadurch gekennzeichnet, dass** sich der Abschirmungsabschnitt (84) an den Umleitungsabschnitt (82) anschließt.

21. Sicherheitsanordnung nach einem der Ansprüche 18 bis 20, **dadurch gekennzeichnet, dass** die Umleitungseinrichtung (80) teilweise oder gänzlich einstückig mit dem Verkleidungsteil (68) ausgebildet ist.

## Claims

1. A trim element for the inner side wall, especially the B-pillar, of a motor vehicle, comprising an upwardly facing edge (78) in the built-in state on which the roof liner can be supported, wherein a diversion section (82) is provided on the edge (78) for diverting an airbag expanding in the direction of the edge (78) around the said edge (78) to the side of the trim element (68) facing the interior space of the motor vehicle, which is followed by a shielding section (84) which protrudes upwardly in the built-in state, **characterized in that** hooks (86, 88) for hooking the trim element (68) into recesses in the side wall and/or the roof frame of a motor vehicle are provided on the shielding section (84).

2. A trim element according to claim 1, **characterized in that** the diversion section (82) extends transversely, preferably obliquely, in relation to the edge (78).

3. A trim element according to one of the claims 1 or 2, **characterized in that** the diversion section (82) extends from the edge (78) to the side of the trim element (68) facing away from the interior space of the motor vehicle.

4. A trim element according to one of the claims 1 to 3, **characterized in that** in the transitional region between the edge (78) and the diversion section (82) and/or the transitional region between the diversion section (82) and the shielding section (84) at least one stiffening rib is arranged on the side of the trim element (68) facing away from the interior space.

5. A trim element according to one of the claims 1 to 4, **characterized in that** the hooks (86, 88) comprise a conical insertion section (90, 92) for promoting the insertion of the hook (86; 88) into the recesses.

6. A trim element according to one of the preceding claims, **characterized in that** the hooks (86, 88) are arranged in such a way that the trim element (68) can be pivoted from a first position in which the hooks (86, 88) can be inserted into the recesses or removed therefrom to the end position on the side wall of the motor vehicle in which the hooks (86, 88) are fastened in the recesses.

7. A safety arrangement for the interior space of a motor vehicle, comprising an inflatable airbag (6) and a trim element (68) for the side wall (8) with an upwardly facing edge (78) which supports the roof liner (22), wherein the inflatable airbag (6) is arranged above the trim element (68) and the edge (78) is arranged in the direction of propagation (34) of the airbag (6), wherein a diversion device (80) is provided for diverting the expanding airbag (6) in the direction of propagation (34) around the edge (78) into the interior space (18) of the motor vehicle, **characterized in that** the trim element (68) is a trim element (68) according to one of the claims 1 to 6.

8. A safety arrangement according to claim 7, **characterized in that** the diversion device (80) is arranged to the side of the edge (78) in the direction of propagation (80).

9. A safety arrangement according to one of the claims 7 or 8, **characterized in that** the diversion device (80) is arranged before the edge (78) in the direction of propagation (34).

10. A safety arrangement according to one of the claims 7 to 9, **characterized in that** the diversion device (80) is arranged like a wall.

11. A safety arrangement according to one of the claims 7 to 10, **characterized in that** the diversion device (80) comprises at least one diversion section (82) which extends transversely to the direction of propagation (34) of the airbag (6).

12. A safety arrangement according to claim 11, **characterized in that** the diversion section (82) extends obliquely to the direction of propagation (34) of the airbag (6).

13. A safety arrangement according to one of the claims 11 or 12, **characterized in that** the diversion device (80) further comprises a shielding section (84) which is arranged between the side wall (8) and/or the roof frame (10) and the area of propagation (42) of the airbag (6).

14. A safety arrangement according to claim 13, **characterized in that** the shielding section (84) further extends between the folded airbag (6) and the side wall (8) and/or the roof frame (10).

15. A safety arrangement according to one of the claims 11 to 14, **characterized in that** the diversion section (48) has a cross-sectional shape in which the degree of diversion of the expanding airbag (6) changes in the direction of propagation (34).

16. A safety arrangement according to claim 15, **characterized in that** the diversion section (48) has a cross-sectional shape formed in the manner of an arc.

17. A safety arrangement according to one of the claims 7 to 16, **characterized in that** the trim element (68) is a B-pillar trim element.

18. A safety arrangement according to one of the claims 7 to 17, **characterized in that** the diversion device (80) is arranged at least in part, but preferably completely, on the trim element (4; 68).

19. A safety arrangement according to claim 18, **characterized in that** the diversion section (82) is arranged on the upwardly facing edge (78) which supports the roof liner (22).

20. A safety arrangement according to claim 19, **characterized in that** the shielding section (84) is adjacent to the diversion section (82).

21. A safety arrangement according to one of the claims 18 to 20, **characterized in that** the diversion device (80) is arranged in part or entirely in an integral manner with the trim element (68).

## Revendications

1. Élément d'habillage pour la paroi latérale intérieure, en particulier le montant B, d'un véhicule à moteur, avec un bord (78) dirigé vers le haut dans l'état monté, sur lequel peut s'appuyer un ciel de toit, une partie de déviation (82) étant prévue sur le bord (78) pour dévier un coussin gonflable se déployant en direction du bord autour du bord (78) vers le côté de l'élément d'habillage (68) tourné vers l'habitacle du véhicule à moteur, à laquelle se raccorde une partie formant écran (84) dépassant vers le haut dans l'état monté, **caractérisé en ce que** sont prévus sur la partie formant écran (84) des crochets (86, 88) destinés à accrocher l'élément d'habillage (68) dans des découpes de la paroi latérale et/ou du cadre de toit d'un véhicule à moteur.

2. Élément d'habillage selon la revendication 1, **caractérisé en ce que** la partie de déviation (82) s'étend transversalement, de préférence en oblique, vers le bord (78).

3. Élément d'habillage selon l'une des revendications 1 ou 2, **caractérisé en ce que** la partie de déviation (82) s'étend depuis le bord (78) vers le côté de l'élément d'habillage (68) tourné à l'opposé de l'habitacle du véhicule à moteur.

4. Élément d'habillage selon l'une des revendications 1 à 3, **caractérisé en ce qu'**il est prévu dans la partie de transition entre le bord (78) et la partie de déviation (82) et/ou dans la partie de transition entre la partie de déviation (82) et la partie formant écran (84) au moins une nervure raidisseuse sur le côté de l'élément d'habillage (68) tourné à l'opposé de l'habitacle.

5. Élément d'habillage selon l'une des revendications 1 à 4, **caractérisé en ce que** les crochets (86, 88) présentent une partie d'introduction conique (90, 92) destinée à faciliter l'introduction des crochets (86, 88) dans les découpes.

6. Élément d'habillage selon l'une des revendications précédentes, **caractérisé en ce que** les crochets (86, 88) sont conformés de telle manière que l'élément d'habillage (68) peut basculer d'une première position, dans laquelle les crochets (86, 88) peuvent être introduits dans les découpes ou retirés de celles-ci, à la position finale sur la paroi latérale du véhicule à moteur, dans laquelle les crochets (86, 88) sont fixés dans les ouvertures.

7. Dispositif de sécurité pour l'habitacle d'un véhicule à moteur avec un coussin d'air gonflable (6) et un élément d'habillage (68) pour la paroi latérale (8) avec un bord (78) dirigé vers le haut et soutenant le ciel de toit (22), le coussin d'air gonflable (6) étant disposé au-dessus de l'élément d'habillage (68) et le bord (78) dans le sens de déploiement (34) du coussin gonflable (6), un dispositif de déviation (80) étant prévu dans le sens de déploiement (34) pour dévier le coussin gonflable (6) en train de se déployer autour du bord (78) dans l'habitacle (18) du véhicule à moteur, **caractérisé en ce que** l'élément d'habillage (68) est un élément d'habillage (68) selon l'une des revendications 1 à 6.

8. Dispositif de sécurité selon la revendication 7, **caractérisé en ce que** le dispositif de déviation (80) est disposé sur le côté du bord (78) dans le sens de déploiement (34).

9. Dispositif de sécurité selon l'une des revendications 7 ou 8, **caractérisé en ce que** le dispositif de déviation (80) est disposé devant le bord (78) dans le sens de déploiement (34).

10. Dispositif de sécurité selon l'une des revendications 7 à 9, **caractérisé en ce que** le dispositif de déviation (80) est conformé comme une paroi.

11. Dispositif de sécurité selon l'une des revendications 7 à 10, **caractérisé en ce que** le dispositif de déviation (80) comporte au moins une partie de déviation (82) qui s'étend transversalement par rapport au sens de déploiement (34) du coussin gonflable (6).

12. Dispositif de sécurité selon la revendication 11, **caractérisé en ce que** la partie de déviation (82) s'étend en oblique par rapport au sens de déploiement (34) du coussin gonflable (6).

13. Dispositif de sécurité selon l'une des revendications 11 ou 12, **caractérisé en ce que** le dispositif de déviation (80) comporte en outre une partie formant écran (84) qui est disposée entre la paroi latérale (8) et/ou le cadre de toit (10) et la zone de déploiement (42) du coussin gonflable (6).

14. Dispositif de sécurité selon la revendication 13, **caractérisé en ce que** la partie formant écran (84) s'étend en outre entre le coussin gonflable (6) plié et la paroi latérale (8) et/ou le cadre de toit (10).

15. Dispositif de sécurité selon l'une des revendications 11 à 14, **caractérisé en ce que** la partie de déviation (48) présente une forme en section suivant laquelle le degré de déviation du coussin gonflable (6) en train de se déployer change dans le sens de déploiement (34).

16. Dispositif de sécurité selon la revendication 15, **caractérisé en ce que** la partie de déviation (48) présente une forme en section en arc de cercle.

17. Dispositif de sécurité selon l'une des revendications 7 à 16, **caractérisé en ce que** l'élément d'habillage (68) est un élément d'habillage de montant B.

18. Dispositif de sécurité selon l'une des revendications 7 à 17, **caractérisé en ce que** le dispositif de déviation (80) est disposé au moins partiellement, de préférence entièrement, sur l'élément d'habillage (4 ; 68).

19. Dispositif de sécurité selon la revendication 18, **caractérisé en ce que** la partie de déviation (82) est disposée sur le bord (78) dirigé vers le haut et soutenant le ciel de toit (22).

20. Dispositif de sécurité selon la revendication 19, **caractérisé en ce que** la partie formant écran (84) se raccorde à la partie de déviation (82).

21. Dispositif de sécurité selon l'une des revendications 18 à 20, **caractérisé en ce que** le dispositif de déviation (80) est conformé partiellement ou entièrement d'un seul tenant avec l'élément d'habillage (68).
